# EUROPÄISCHE PATENTSCHRIFT

(11) **EP 0 831 258 B1**
(45) Veröffentlichungstag und Bekanntmachung des Hinweises auf die Patenterteilung: **11.08.2004**
(21) Anmeldenummer: 97116139.3
(22) Anmeldetag: 17.09.1997
(51) Int. Cl.: F16J 15/10, F01M 11/00

(54) **Dichtanordnung entlang zweier winkelbildender Ränder eines Wandelements**
Sealing arrangement along two angled edges of a wall element
Arrangement de joint le long de deux bords d'un élément de paroi formant un angle

(30) Priorität: 20.09.1996 DE 19638817
(43) Veröffentlichungstag der Anmeldung: 25.03.1998
(73) Patentinhaber: MTU Friedrichshafen GmbH, 88040 Friedrichshafen (DE)
(72) Erfinder: Ottenschläger, Josef, Dipl.-Ing., 88069 Tettnang (DE)
(74) Vertreter: Winter, Josef

(56) Entgegenhaltungen:
- US-A- 4 394 853
- US-A- 4 597 583
- US-A- 4 669 432
- US-A- 5 218 938

## Beschreibung

Es ist bekannt, auf der Unterseite des Kurbelgehäuses eine Ölwanne anzuordnen, die dazu dient, das von den Schmierstellen des Motors abfließende Schmieröl aufzunehmen. Die Abdichtung der Ölwanne erfolgt mit einer gummielastischen Dichtung, die in entlang der Ölwannenränder verlaufenden Nuten eingelegt ist und mit Preßsitz an einer Dichtfläche am Kurbelgehäuse anliegt.

Eine derartige Dichtanordnung geht beispielsweise aus der DE 38 15 511 C2 als bekannt hervor.

Im weiteren sind Ölwannen bekannt, die an einem obenliegenden Rand dichtend mit dem Kurbelgehäuse, und die an einem stirnseitigen Rand mit dem Gehäuse eines Geräteträgers verbunden sind, das eine stirnseitige Öffnung der Ölwanne abdeckt. Die Wandungen der Ölwanne bilden an dieser Stelle ein Wandelement mit einer abzudichtendenen Ecke. Die Abdichtung des stirnseitigen Randes, der sich im wesentlichen orthogonal zum kurbelgehäuseseitigen Rand erstreckt, erfolgt durch eine in Nuten angeordnete Dichtung, die auf dem gesamten Verlauf des Ölwannenrandes liegt. Im Bereich der Ecke befindet sich eine quer zur Erstreckungsrichtung der Dichtung verlaufende Kante, die von den in einem rechten Winkel zueinander stehenden Flächen der Ränder gebildet wird. Mit einer über diese Kante hinweglaufenden, in einer Ebene liegenden Dichtung kann eine einwandfreie Abdichtung nicht erzielt werden, weil die Dichtung in diesem Bereich aufgrund der Umlenkung offenbar nicht gleichmäßig an den zugehörigen Dichtflächen angepreßt anliegt. Solche Dichtanordnungen sind z.B. aus der US-A-4,394,853 bekannt.

Der im Patentanspruch 1 angegebenen Erfindung liegt das Problem zugrunde, in Dichtbereichen, in denen Ränder eines Wandelements mit Dichtflächen unter Bildung einer Kante in einem Winkel zueinander liegen, Abdichtmaßnahmen zu treffen, die eine einwandfreie und dauerhafte Abdichtung gewährleisten.

Dieses Problem wird durch die im Patentanspruch 1 aufgeführten Merkmale gelöst. Im Bereich der Kante, vorzugsweise des Wandelements mit einer Außenecke, ist eine Ausnehmung vorgesehen, in der ein Abschnitt der Dichtung in Richtung der Kante verlaufend angeordnet ist, wobei die Ausnehmung derart ausgebildet ist, daß die Dichtung mit Preßsitz an korrespondierenden Flächen der Ränder eines komplementären Wandelements anliegt. Mit dieser Ausgestaltung wird erreicht, daß die Dichtung nicht in einer Ebene umgelenkt wird, die senkrecht auf den Dichtflächen steht. Vielmehr wird die Dichtung in zwei Schritten in zwei Ebenen umgelenkt, die in den Dichtflächen liegen. Dadurch wird der in der Kante liegende Dichtungsabschnitt wie die anschließenden Dichtungsabschnitte jeweils nur quer zu seiner Erstreckungsrichtung zusammengepreßt, was letztlich zur völligen Dichtheit auch im Kantenbereich führt. Dabei ist der in Richtung der Kante verlaufende Dichtungsabschnitt zugleich in zwei Querrichtungen, nämlich in Richtung der Normalen auf die Dichtflächen beiderseits der Kante, beansprucht.

Die Dichtanordnung dient insbesondere zur Abdichtung des Eckbereichs eines rechtwinkligen Wandelements.

Die Dichtung kann in zweckmäßiger Aufgestaltung, wie nach den Unteransprüchen angegeben, auch in Nuten des weiteren, zweiten Wandelements eingelegt sein. Die Dichtung kann einteilig oder mehrteilig ausgeführt sein. Der in der Kante verlaufende Dichtungsabschnitt kann also gegenüber den anderen Dichtungsabschnitten als separater Abschnitt ausgebildet sein. Der entsprechende Abschnitt kann aber auch einstückig mit dem zur einen Seite von der Ecke weglaufenden (kurbelgehäuseseitigen) Dichtungsabschnitt oder dem von der anderen Seite der Ecke weglaufenden (zum Gehäuse des Geräteträgers hin gerichteten) Dichtungsabschnitt ausgebildet sein.

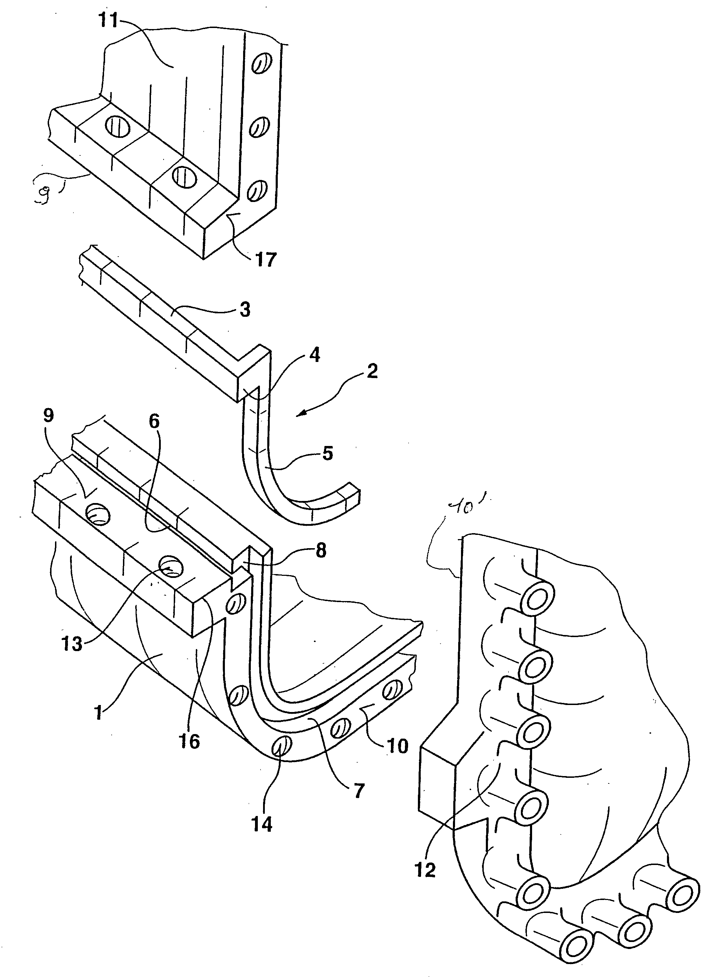

Ein Ausführungsbeispiel der Erfindung ist in der Zeichnung dargestellt und wird im folgenden näher beschrieben. Es zeigt die einzige Figur, eine fragmentarische, dreidimensionale Explosionsansicht der Dichtungsanordnung im Bereich von senkrecht aneinander anstoßenden Randabschnitten einer Ölwanne einer Brennkraftmaschine, die ein erstes Wandelement mit vorspringender Ecke ausbildet.

Die in der Figur dargestellte fragmentarische Ölwanne 1 ist an ihren Rändern zum einen dichtend mit dem Flansch eines Kurbelgehäuses 11 verbunden und zum anderen mit einem Flansch an einem Gehäuse, das einen Geräteträger 12 für eine nicht dargestellte Brennkraftmaschine bildet. Vom Kurbelgehäuse 11 und dem Geräteträger 12 sind ebenso wie von der Ölwanne 1 jeweils nur ein Fragment dargestellt. Natürlich liegt die Ölwanne 1 am gesamten oberen Rand am Kurbelgehäuse 11 an und ebenso stirnseitig auf dem gesamten stirnseitigen Rand am Geräteträger 12. Ein Wandstück des Geräteträgers bildet mit einem Wandstück des Kurbelgehäuses zusammen ein zweites, mit einer Innenecke ausgebildetes Wandelement mit zum ersten, mit einer Außenecke ausgebildetem Wandelement komplementären Rändern. Die Ölwanne 1 ist entlang der Ränder mit Nuten 6, 7 ausgebildet, in die eine aus drei Dichtungsabschnitten 3, 4 und 5 bestehende gummielastische Dichtung 2 eingelegt werden kann. Die Dichtung 2 kann beispielsweise eine kreisförmige oder rechteckige oder auch eine beliebige andere Querschnittsform aufweisen. Die Nuttiefe und der Dichtungsdurchmesser sind so aufeinander abgestimmt, daß nach dem Anbau des Geräteträgers 12 bzw. dem Anbau der Ölwanne 1 am Kurbelgehäuse 11 die Dichtung mit Preßsitz an den Anlageflächen am Kurbelgehäuse und am Geräteträger anliegt. Die Ölwanne ist mit einem umlaufenden Flansch mit Gewindelöchern 13 und 14 ausgebildet, die zur Befestigung der Ölwanne 1 an korrespondierenden Flanschen des Kurbelgehäuses 11 und des Geräteträgers 12 mittels Schrauben dienen. Der Geräteträger ist zugleich auch noch an einer Fläche 17 des Kurbelgehäuses befestigt, die in der gleichen Ebene verläuft, wie eine Fläche 10 an der Stirnseite der Ölwanne. Der Dichtungsabschnitt 4, hier einstückig mit den Dichtungsabschnitten 3 und 5 dargestellt, kommt in eine Ausnehmung 8 zu liegen, die parallel zu einer Kante 16 verläuft. Die Kante 16 wird gebildet als Schnittlinie der Flächen 9 und 10, die die Ränder der Ölwanne 1 darstellen. Die Ausnehmung 8 stellt eine rechtwinklige Ausfräsung dar, die von der Kurbelgehäuseseite her oder von der Geräteträgerseite her eingearbeitet werden kann. Die Tiefe der Ausfräsung entspricht den Nuttiefen der Nuten 6 und 7. Die Ausnehmung 8 verbindet die Nuten 6 und 7, die in der Kante 16 mit einem Versatz quer zur Erstreckungsrichtung der Dichtung auslaufen. Die in Richtung der Kante 16 verlaufende Ausnehmung 8 dient zur Aufnahme des Dichtungsabschnitts 4. Der Dichtungsabschnitt 4 überragt die Fläche 9 und die Fläche 10 in gleicher Weise wie es die Dichtungsabschnitte 3 und 5 tun. Nachdem Ölwanne und Geräteträger angeschraubt sind, liegt der Dichtungsabschnitt 4 deshalb mit Preßsitz am Kurbelgehäuse und am Gehäuse des Geräteträgers an. Dadurch wird eine einwandfreie und dauerhafte Abdichtung des Kantenbereichs erzielt. Die Umlenkung der Dichtung erfolgt nunmehr nicht mehr in einer senkrecht zu den Flächen 9, 10 verlaufenden Ebene, sondern in zwei Schritten jeweils in Ebenen, die parallel zu den Flächen 9, 10 liegen. Dadurch wird die Dichtung in ihrem ganzen Verlauf jeweils nur quer zu ihrer Erstreckungsrichtung gepreßt, während beim Stand der Technik im Bereich der Umlenkung in Richtung der Längsachse der Dichtung Kräfte aufgeprägt werden, was letztendlich keine ausreichende Anlage an den Dichtflächen und Undichtigkeit bewirkt.

Die Dichtung 2 kann einstückig ausgebildet sein. Der Dichtungsabschnitt 4 kann aber auch als zu den Dichtungsabschnitten 3 und 5 separater, oder nur mit einem der Dichtungsabschnitte 3 oder 5 zusammenhängend ausgebildet sein.

Im weiteren ist es auch denkbar, die Nuten 6 und 7 ebenso wie die Ausnehmung 8 in den Anlagenflächen des Kurbelgehäuses oder des Geräteträgergehäuses anzuordnen.

Die Abdichtung zwischen dem Gehäuse des Geräteträgers und dem Kurbelgehäuse erfolgt in der Fläche 17, beispielsweise mittels einer auf die Fläche aufgebrachten aushärtbaren Dichtpaste. Im Bereich der Fläche 17 kann aber auch eine Nut entsprechend den Nuten 6 und 7 vorgesehen sein, in der ein Dichtungsabschnitt wie die für die Dichtung 2 verwendeten Dichtungsabschnitte angeordnet sein.

## Patentansprüche

1. Dichtanordnung entlang zweier in einem Winkel zueinander verlaufender, einander in einer Schnittkante (16) schneidender Ränder (9, 10) am Umfang eines ersten Wandelements (1), insbesondere eines ersten Gehäuses, insbesondere einer Ölwanne (1) einer Brennkraftmaschine, das an einem obenliegenden Rand (9) in dichtender Verbindung mit einem komplementären Rand (9') eines Elements (11), insbesondere eines Kurbelgehäuses (11), und an einem stirnseitigen Rand (10) in dichtender Verbindung mit einem komplementären Rand (10') eines zweiten Wandelements (12), insbesondere eines Geräteträgers (12) eines zweiten aus dem Kurbelgehäuse (11) und dem Geräteträger (12) zusammengesetzten Gehäuses der Brennkraftmaschine steht, wobei als Dichtanordnung entlang dem oberen Rand (9) des ersten Wandelements (1) und/oder entlang dem zum Rand (9) komplementaren Rand (9') des Elements (11) , insbesondere des Kurbelgehäuses (11), eine erste Nut (6) und entlang dem stirnseitigen Rand (10) des ersten Wandelements (1) und/oder entlang dem Rand (10') des zweiten Wandelements (12), insbesondere des Geräteträgers (12), dem Verlauf der Ränder (9, 10) entsprechend im Winkel dazu eine zweite Nut (7) vorgesehen sind, in die ein erster und zweiter Dichtungsabschnitt (3 und 5) einer Dichtung (2) eingelegt sind, **dadurch gekennzeichnet, dass** die erste und zweite Nut (6, 7) in der Schnittkante (16) quer versetzt zueinander angeordnet sind, und dass in der Schnittkante (16) in Richtung des Versatzes zwischen den Nuten (6, 7) eine Ausnehmung (8) zur Anordnung eines dritten Dichtungsabschnitts (4) vorgesehen ist.

2. Dichtanordnung nach Anspruch 1, **dadurch gekennzeichnet, dass** das erste Wandelement (1) mit einem rechten Winkel ausgebildet ist.

3. Dichtanordnung nach Anspruch 1 oder 2, **dadurch gekennzeichnet, dass** die Dichtung (2) einstückig ausgebildet ist.

4. Dichtanordnung nach Anspruch 1 oder 2, **dadurch gekennzeichnet, dass** der Dichtungsabschnitt (4) als ein zu den Dichtungsabschnitten (3 und 5) in den Nuten (6 und 7) separater Dichtungsabschnitt ausgebildet ist.

5. Dichtanordnung nach Anspruch 1 oder 2, **dadurch gekennzeichnet, dass** der Dichtungsabschnitt (4) entweder mit dem Dichtungsabschnitt (5) in der Nut (7) oder dem Dichtungsabschnitt (3) in der Nut (6) zusammenhängend ausgebildet ist.

6. Dichtanordnung nach einem der Ansprüche 1 bis 5, **dadurch gekennzeichnet, dass** die Nuten (6, 7) und die Ausnehmung (8) zur Aufnahme der Dichtungsabschnitte (3, 4 oder 5) im ersten, von der Ölwanne (1) gebildeten Wandelement und/oder im zweiten, aus Kurbelgehäuse (11) und Geräteträger (12) zusammengesetzten Wandelement angeordnet sind.

7. Dichtanordnung nach einem der Ansprüche 1 bis 6, **dadurch gekennzeichnet, dass** die Tiefe der Ausnehmung (8) den Nuttiefen der Nuten (6, 7) entspricht.

8. Dichtanordnung nach einem der Ansprüche 1 bis 7, **dadurch gekennzeichnet, dass** die Nuten (6, 7) und die Ausnehmung (8) so dimensioniert sind, dass die darin aufgenommene Dichtung (2) über die von den Rändern (9, 10; 9', 10') gebildeten Dichtflächen übersteht, wenn die Wandelemente (1; 11, 12) unverbunden sind.

## Claims

1. Sealing arrangement along two margins (9, 10), running at an angle to one another and intersecting at an intersecting edge (16), at the periphery of a first wall element (1), in particular of a first housing, in particular of an oil pan (1) of an internal combustion engine, this wall element (1) being connected in a sealing manner at a top margin (9) to a complementary margin (9') of an element (11), in particular of a crankcase (11), and being connected in a sealing manner at an end-face margin (10) to a complementary margin (10') of a second wall element (12), in particular of a device carrier (12) of a second housing, composed of the crankcase (11) and the device carrier (12), of the internal combustion engine, in which case, as sealing arrangement, a first groove (6) is provided along the top margin (9) of the first wall element (1) and/or along the margin (9'), complementary to the margin (9), of the element (11), in particular of the crankcase (11), and a second groove (7) is provided along the end-face margin (10) of the first wall element (1) and/or along the margin (10') of the second wall element (12), in particular of the device carrier (12), at an angle thereto in accordance with the course of the margins (9, 10), into which grooves (6, 7) a first and a second seal section (3 and 5) of a seal (2) are inserted, **characterized in that** the first and second grooves (6, 7) are arranged transversely offset from one another in the intersecting edge (16), and **in that** a recess (8) for the arrangement of a third seal section (4) is provided in the intersecting edge (16) in the direction of the offset between the grooves (6, 7).

2. Sealing arrangement according to Claim 1, **characterized in that** the first wall element (1) is designed with a right angle.

3. Sealing arrangement according to Claim 1 or 2, **characterized in that** the seal (2) is of one-piece design.

4. Sealing arrangement according to Claim 1 or 2, **characterized in that** the seal section (4) is designed as a seal section which is separate from the seal sections (3 and 5) in the grooves (6 and 7).

5. Sealing arrangement according to Claim 1 or 2, **characterized in that** the seal section (4) is designed so as to be joined together either with the seal section (5) in the groove (7) or with the seal section (3) in the groove (6).

6. Sealing arrangement according to one of Claims 1 to 5, **characterized in that** the grooves (6, 7) and the recess (8) for accommodating the seal sections (3, 4 or 5) are arranged in the first wall element formed by the oil pan (1) and/or in the second wall element composed of crankcase (11) and device carrier (12).

7. Sealing arrangement according to one of Claims 1 to 6, **characterized in that** the depth of the recess (8) corresponds to the groove depths of the grooves (6, 7).

8. Sealing arrangement according to one of Claims 1 to 7, **characterized in that** the grooves (6, 7) and the recess (8) are dimensioned in such a way that the seal (2) accommodated therein projects beyond the sealing faces formed by the margins (9, 10; 9', 10') when the wall elements (1; 11, 12) are not connected.

## Revendications

1. Agencement d'étanchéité disposé le long de deux bords (9, 10) qui s'étendent obliquement l'un par rapport à l'autre et qui se coupent mutuellement le long d'un bord de coupe (16) à la périphérie d'un premier élément de paroi (1), en particulier d'un premier caisson, en particulier d'un carter d'huile (1) d'un moteur à combustion interne, un bord supérieur (9) de cet élément de paroi étant relié de manière étanche à un bord complémentaire (9') d'un élément (11), en particulier d'un carter de vilebrequin (11) et un bord frontal (10) de cet élément de paroi étant relié de manière étanche à un bord complémentaire (10') d'un deuxième élément de paroi (12), en particulier d'un support d'appareil (12) d'un deuxième caisson du moteur à combustion interne constitué du carter de vilebrequin (11) et du support d'appareil (12), une première rainure (6) étant prévue comme agencement d'étanchéité le long du bord supérieur (9) du premier élément de paroi (1) et/ou le long du bord (9'), complémentaire du bord (9), de l'élément (11), en particulier du carter de vilebrequin (11), et une deuxième rainure (7) étant prévue le long du bord frontal (10) du premier élément de paroi (1) et/ou le long du bord (10') du deuxième élément de paroi (12), en particulier du support d'appareil (12), obliquement par rapport à l'étendue des bords (9, 10), une première et une deuxième partie (3 et 5) d'un joint d'étanchéité (2) étant placées dans ces rainures, **caractérisé en ce que** la première et la deuxième rainure (6, 7) sont disposées en décalage transversal mutuel dans le bord de coupe (16) et **en ce qu'**une découpe (8) destinée à agencer une troisième partie (4) du joint d'étanchéité est prévue dans le bord de coupe (16) en direction du décalage existant entre les rainures (6, 7).

2. Agencement d'étanchéité selon la revendication 1, **caractérisé en ce que** le premier élément de paroi (1) est configuré à angle droit.

3. Agencement d'étanchéité selon les revendications 1 ou 2, **caractérisé en ce que** le joint d'étanchéité (2) est réalisé d'une seule pièce.

4. Agencement d'étanchéité selon les revendications 1 ou 2, **caractérisé en ce que** la partie (4) du joint d'étanchéité est configurée comme partie de joint d'étanchéité séparée des parties (3 et 5) du joint d'étanchéité qui sont disposées dans les rainures (6 et 7).

5. Agencement d'étanchéité selon les revendications 1 ou 2, **caractérisé en ce que** la partie (4) du joint d'étanchéité est réalisée d'une seule pièce soit avec la partie (5) du joint d'étanchéité qui est placée dans la rainure (7) soit avec la partie (3) du joint d'étanchéité qui est placée dans la rainure (6).

6. Agencement d'étanchéité selon l'une des revendications 1 à 5, **caractérisé en ce que** les rainures (6, 7) et la découpe (8) de réception des parties (3, 4 ou 5) du joint d'étanchéité sont disposées dans le premier élément de paroi formé par le carter d'huile (1) et/ou dans le deuxième élément de paroi constitué du carter de vilebrequin (11) et du support d'appareil (12).

7. Agencement d'étanchéité selon l'une des revendications 1 à 6, **caractérisé en ce que** la profondeur de la découpe (8) correspond à la profondeur des rainures (6, 7).

8. Agencement d'étanchéité selon l'une des revendications 1 à 7, **caractérisé en ce que** les rainures (6, 7) et la découpe (8) sont dimensionnées de telle sorte que le joint d'étanchéité (2) qui y est reçu déborde des surfaces d'étanchéité formées par les bords (9, 10; 9', 10') lorsque les éléments de paroi (1; 11, 12) ne sont pas reliés.
